(19) Europäisches Patentamt
European Patent Office
Office européen des brevets

(11) **EP 4 664 140 A1**

(12) **EUROPEAN PATENT APPLICATION**

(43) Date of publication:
**17.12.2025 Bulletin 2025/51**

(21) Application number: **25181630.2**

(22) Date of filing: **10.06.2025**

(51) International Patent Classification (IPC):
**G01S 3/04** (2006.01)    **G01S 3/48** (2006.01)
**G01S 13/84** (2006.01)    **G01S 3/10** (2006.01)

(52) Cooperative Patent Classification (CPC):
**G01S 13/84; G01S 3/04; G01S 3/10; G01S 3/48;**
G01S 3/74

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.06.2024  CN 202410756259**

(71) Applicant: **NXP B.V.**
**5656 AG Eindhoven (NL)**

(72) Inventors:
• **XU, Dechen**
  **5656AG Eindhoven (NL)**
• **QIN, Handi**
  **5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **A COMMUNICATION DEVICE FOR ANGLE ESTIMATION AND THE METHOD THEREOF**

(57)     A method for determining an angle of arrival at a first communication device having a first antenna and a second antenna aligned along a direction and defining a normal thereto. The method comprises performing a respective signal exchange through each of a plurality of channels between the first communication device and a second communication device, storing a first plurality of in-phase and quadrature(I/Q) samples; estimating channel frequency responses for the first antenna and the second antenna respectively; measuring a respective distance; creating respective standard channel frequency response components corresponding to the respective distances; for each propagation path, selecting a first respective weight and a second respective weight; selecting a weight w1 (1) and an other weight w2(1);determining, based on the weight w1 (1) and the other weight w2 (1), the angle of arrival, relative to the normal, of signals direct from the second communication device.

Performing a respective signal exchange between a first communication device and a second communication device — 602

Storing I/Q samples generated from a first antenna and a second antenna and the other communication device — 604

Measuring a respective distance, for each of at least one propagation path, between the communication device and the second communication device, by using at least one of channel frequency responses $h_1$ and $h_2$ — 606

Creating a standard CFR matrix $B$ with each column corresponding to the respective distance — 608

For each propagation path, estimating a first respective weight for the first antenna by using $h_1$ and $B$; and estimating a second respective weight for the second antenna by using $h_2$ and $B$ — 610

Selecting a weight $\hat{w}_1(1)$ of a direct path for the first antenna and an other weight $\hat{w}_2(1)$ of a direct path for the second antenna — 612

Determining, based on the weight $\hat{w}_1(1)$ and the other weight $\hat{w}_2(1)$, the angle of arrival, relative to the normal, of signals direct from the second communication device — 614

**FIG. 6**

EP 4 664 140 A1

**Description**

BACKGROUND

The present invention relates to angle estimation method in a narrow-band system, and more particularly to a device and a method for determining an angle of arrival by using channel sounding technology.

The next generation of Internet-of Things (IoT) applications requires access control by enforcement of security perimeters and enablement of location-aware services. This is propelling the industry to develop accurate ranging and localization solutions. Various narrow-band system (NBS) technologies are being considered for the purpose of localization, each having their pros and cons. And "narrow-band" means the band-width of a transmitted signal is far smaller than the carrier frequency, e.g. 2MHz signal bandwidths with carrier frequency of 2.4GHz.

The current NBS based localization technologies use multiple distributed anchors for position estimation. However, multiple-anchor positioning is high-cost, and may not be possible in some situations. The conventional BLUETOOTH-LE (BLE) direction finding (DF) anchors rely on large antenna arrays to achieve high resolution. However, a large antenna array is generally not possible in scenarios with strict device dimension constraint.

Accordingly, there is a need to provide a robust alternative solution for angle estimation with narrowband systems.

SUMMARY

This summary is provided to introduce a selection of concepts in a simplified form that are further described below in the Detailed Description. This summary is not intended to be relied on to identify key features or essential features of the claimed subject matter, nor is it intended to be used to limit the scope of the claimed subject matter.

According to one aspect of the invention, there is a method for determining an angle of arrival at a first communication device having a first antenna and a second antenna aligned along a direction and defining a normal thereto. The method comprises performing a respective signal exchange through each of a plurality of channels between the first communication device and a second communication device, wherein each signal exchange comprises a transmit signal and a receive signal, wherein each of the transmit signal and the receive signal of each signal exchange has a frequency which is equal to a base frequency plus an integer multiple of a same frequency-offset; storing a first plurality of in-phase and quadrature(I/Q) samples generated from each signal exchange between the second communication device and the first antenna, and a second plurality of I/Q samples generated from the signal exchanges between the second communication device and the second antenna; estimating channel frequency response $h_1$ for the first antenna by using the first plurality of in-phase and quadrature(I/Q) samples and channel frequency response $h_2$ for the second antenna respectively by using the second plurality of I/Q samples; measuring a respective distance, for each of at least one propagation path, between the communication device and the second communication device by using at least one of the channel frequency responses $h_1$ and $h_2$; creating a standard channel frequency response (CFR) matrix B with each column corresponding to the respective distance; for each propagation path, estimating a first respective weight for the first antenna based on the channel frequency responses for the first antenna and the standard CFR matrix B, and estimating a second respective weight for the second antenna based on the channel frequency responses for the second antenna and the standard CFR matrix $B$; selecting a weight w1(1) of a direct path between the first antenna and the second communication device and another weight w2(1) of a direct path between the second antenna and the second communication device, respectively; determining, based on the weight w1(1) and the other weight w2 (1), the angle of arrival, relative to the normal, of the signal direct from the second communication device.

According to one or more embodiments, the first antenna and the second antenna transmit signals with the same frequencies.

According to one or more embodiments, to measure the at least one distance of at least one propagation path between the communication device and the second communication device, the method further comprises using to reconstruct a one-way channel response; and estimating the distances between the communication device and the second communication device based on the one-way channel response.

According to one or more embodiments, the first communication device comprises one of an initiator device and a reflector device, and the second communication device comprises the other one of the initiator device and the reflector device.

According to one or more embodiments, the second communication device comprises one antenna, and the angle of arrival is azimuth angle.

According to one or more embodiments, each of the weights $\hat{w}_1(1)$ and $\hat{w}_2(1)$ comprises phase and amplitude, and wherein the angle of arrival is determined based on both of the phase difference of the $\hat{w}_1(1)$ and $\hat{w}_2(1)$ and the amplitudes of $\hat{w}_1(1)$ and $\hat{w}_2(1)$.

According to one or more embodiments, the communication device comprises three antennas arranged in a plane, and the angle of arrival includes an azimuth angle and an elevation angle with respect to the normal perpendicular to the plane.

According to one or more embodiments, the distance between the first antenna and the second antenna is equal to or less than half the wavelength of the exchanged signals.

According to one or more embodiments, the first antenna and the second antenna are included in a single antenna enclosure.

According to one or more embodiments, the second communication device comprises two or three antennas.

According to one or more embodiments, the method further comprises determining an angle of arrival of the second communication device.

According to a second aspect of the invention, there is a first communication device, comprising a transceiver unit comprising a first antenna and a second antenna, wherein the transceiver unit is configured to perform a signal exchange between the communication device and a second communication device; a processing unit configured to: performing a respective signal exchange through each of several a plurality of channels between the first communication device and another a second communication device, wherein the communication device comprises a first antenna and a second antenna with narrow-band radios, wherein each signal exchange comprises a transmit signal and a receive signal, wherein each of the transmit signal and the receive signal of the signal exchange has a frequency which is equal to a base frequency plus an integer multiple of a same frequency-offset; storing a first plurality of in-phase and quadrature(I/Q) samples generated from the signals exchanges between the other second communication device and the first antenna, and a second plurality of I/Q samples generated from the signals exchanges between the other second communication device and the second antenna; estimating channel frequency response $h_1$ for the first antenna by using the first plurality of in-phase and quadrature(I/Q) samples and channel frequency response $h_2$ for the second antenna respectively by using the second plurality of I/Q samples; measuring a respective distance, for each of at least one propagation path, between the communication device and the second communication device by using at least one of the channel frequency responses $h_1$ and $h_2$; creating a standard CFR matrix $B$ corresponding to the respective distance; estimating a first respective weight for each path of the first antenna based on the channel frequency responses for the first antenna and the standard CFR matrix $B$, and estimating a second respective weight for each path of the second antenna based on the channel frequency responses for the second antenna and the standard CFR matrix $B$; selecting a weight w1(1) of a direct path between the first antenna and the second communication device and another weight w2(1) of a direct path between the second antenna and the second communication device, respectively; determining, based on the weight w1(1) and another weight w2(1), an angle of arrival, relative to the normal, of signals direct from the second communication device.

According to one or more embodiments, the communication device comprises a single antenna enclosure which includes the first antenna and the second antenna.

According to one or more embodiments, the communication device comprises one of an initiator device and a reflector device, and the other communication device comprises the other one of the initiator device and the reflector device.

According to one or more embodiments, the other communication device comprises one antenna, and the angle of arrival is azimuth angle.

According to one or more embodiments, the communication device comprises three antennas, and the angle of arrival includes an elevation angle.

According to one or more embodiments, the distance between the first antenna and the second antenna is in the range of qual or less than half the wavelength of the exchanged signals.

According to a third aspect of the invention, there is a narrow-band system, comprising a first communication device and a second communication device described herein.

According to one or more embodiments, the first communication device comprises at least three antennas and the second communication device comprises at least three antennas.

According to one or more embodiments, the second communication device is configured to determine the angle of arrival at the second communication device.

BRIEF DESCRIPTION OF THE DRAWINGS

So that the manner in which the above recited features of the present application can be understood in detail, a more particular description of the application, briefly summarized above, can be had by reference to embodiments, some of which are illustrated in the appended drawings. It is to be noted, however, that the appended drawings illustrate only typical embodiments of this application and are therefore not to be considered limiting of its scope, for the application can admit to other equally effective embodiments. The drawings are for facilitating an understanding of the application and thus are not necessarily drawn to scale. Advantages of the subject matter claimed will become apparent to those skilled in the art upon reading this description in conjunction with the accompanying drawings, in which like reference numerals have been used to designate like elements, and in which:

FIG. 1 illustrates an example of a narrowband radio system configured to perform a round-trip phase measurement between two devices, according to an exemplary embodiment of the present disclosure;

FIG. 2 illustrates a signal exchange between a first communication device and a second communication device according to an exemplary embodiment of the present disclosure according to an exemplary embodiment of the present disclosure;

FIG. 3 illustrates geometric relationship of a system with three dimensions according to an exemplary embodiment of the present disclosure;

FIG. 4 shows a graph illustrating examples of channel frequency responses-based distance measurements producing a crater scenario according to an exemplary embodiment of the present disclosure;

FIG. 5 shows a graph illustrating angle estimation results according to an exemplary embodiment of the present disclosure;

FIG. 6 shows a flowchart illustrating an example of a method for angle estimation according to an exemplary embodiment of the present disclosure;

FIG. 7 illustrates an example of a device configured to implement methods described herein according to an exemplary embodiment of the present disclosure.

FIG. 8 illustrates system comprising a first communication with three antennas for angle estimation according to an exemplary embodiment of the present disclosure.

## DETAILED DESCRIPTION

Low-cost narrow-band wireless devices in the 2.4GHz Industrial, Scientific and Medical (ISM) frequency bands using BLE and/or Institute of Electrical and Electronics Engineers (IEEE) 802.15.4 standards are being deployed in the fast-growing applications of IoT. Bluetooth technology has the advantage of being widely available in smartphones, which enables a convenient and low-cost connectivity solution with a variety of smart BLE-enabled devices, sensors, and smart edge-nodes in a diverse set of IoT applications.

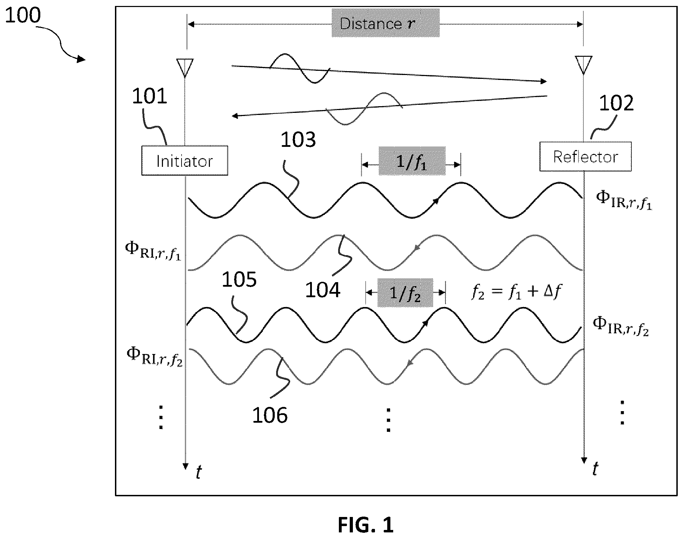

FIG. 1 illustrates an example of narrowband radio system 100 configured to perform a round-trip phase measurement (RTP) between two communication devices. Initiator device 101 and reflector device 102 may include any electronic device equipped with a narrowband radio. For example, in some applications, initiator device 101 may include a smart home device, e.g., smart lock, smart phone, Bluetooth speaker, whereas reflector device 102 may include a key fob, smartphone, tablet, or laptop.

Narrowband radio system 100 achieves enhanced spatial resolution by exchanging information from as many narrowband frequency channels as possible. At each frequency $f_j$, $j = 1, 2, \cdots$, initiator device 101 starts the RTP procedure and transmits a tone to reflector device 102. After finishing the reception of the tone from initiator device 101, reflector device 102 transmits the tone to initiator device 101, where local oscillator (LO) (not shown) of reflector device 102 is used to generate a tone, which has an initial phase coherent with the initial phase during tune receiving. For example, at 103 a first tone (f1) is transmitted by initiator device 101 and received by reflector device 102. Following 103, reflector device 102 measures one or multiple in-phase and quadrature (I/Q) samples captured in the baseband stage. Also, reflector device 102 receives the first tone (f1) and send back to the initiator device 101 at 104. Following 104, initiator device 101 measures one or multiple in-phase and quadrature (I/Q) samples captured in the baseband stage. Thus, I/Q samples can be captured from both sides.

Phase correction terms (PCT) are then calculated by using the I/Q samples captured by the reflector device 102 in the baseband stage and the I/Q samples captured by the initiator device 101 in the baseband stage. The PCT matrices obtained from I/Q samples on initiator device 101 and reflector device 102 are:

$$H_{\text{IR}} = \begin{bmatrix} \boldsymbol{h}_{\text{IR},1}, & \boldsymbol{h}_{\text{IR},2}, & \cdots, & \boldsymbol{h}_{IR,k}, & \cdots \end{bmatrix}, \ H_{RI} = \begin{bmatrix} \boldsymbol{h}_{RI,1}, & \boldsymbol{h}_{RI,2}, & \cdots, & \boldsymbol{h}_{RI,k}, & \cdots \end{bmatrix}$$

where $\boldsymbol{h}_{\text{IR},k}(j)$ and $\boldsymbol{h}_{\text{RI},k}(j)$ are the PCT elements on antenna path $k$ and frequency $f_j$, where the subscript IR denotes the path from the initiator to the reflector, and the subscript RI denotes the path from the reflector to the initiator. "Antenna path" is a term from Bluetooth channel sounding (CS) specification ("Bluetooth channel sounding CR_PR draft" prepared by Core Specification Working Group on June 22, 2023). And "antenna path k" means the path between the k-th antenna of the initiator, and the reflector which is assumed to have a single antenna.

$$H^2 = H_{\text{IR}} \odot H_{\text{RI}} = \begin{bmatrix} \boldsymbol{h}_1^2, & \boldsymbol{h}_2^2, & \cdots, & \boldsymbol{h}_k^2, & \cdots \end{bmatrix}$$

where $\odot$ denotes Hadamard product, $h_k^2(j) = h_{\mathrm{IR},k}(j) \cdot h_{\mathrm{RI},k}(j)$ is the two-way channel frequency response, where "two-way" means transmitting signals from the initiator device and reflecting the signals from the reflector device.

The phases of the received signals are:

$$\arg(\boldsymbol{h}_{\mathrm{IR},k}(j)) = \Phi_{\mathrm{I},f_j} - \Phi_{\mathrm{R},f_j} + \Phi_{r_k,f_j}$$

$$\arg(\boldsymbol{h}_{\mathrm{RI},k}(j)) = \Phi_{\mathrm{R},f_j} - \Phi_{\mathrm{I},f_j} + \Phi_{r_k,f_j}$$

and as a result, $\arg(\boldsymbol{h}_k^2(j)) = 2\Phi_{r_k,f_j}$

where $r_k$ denotes the distance between initiator device and reflector device on antenna path $k$, $\Phi_{\mathrm{I},f_j}$ and $\Phi_{\mathrm{R},f_j}$ are the initial phases of local oscillators (LO) at initiator and reflector sides on frequency $f_j$, $\Phi_{r_k}$ is the phase increment due to wave propagation of $r_k$ distance.

The one-way channel frequency response $\boldsymbol{H} = [\boldsymbol{h}_1, \boldsymbol{h}_2, \cdots]$ can then be reconstructed from $\boldsymbol{H}^2$.

For each antenna of the initiator device 101, the estimated channel frequency response $\boldsymbol{H}$ can be obtained from I/Q samples by using a ranging algorithm such as that just described. It will, however, be appreciated that the ranging algorithm can use various existing data combinations and processing methods based on amplitude and phases from the I/Q samples.

Then the channel frequency response $\boldsymbol{h}_k(j)$ which is one element of $\boldsymbol{H}$ contains the phase increment as:

$$\arg(\boldsymbol{h}_k(j)) = \Phi_{r_k,f_j},$$

where $\boldsymbol{h}_k(j)$ represents the channel frequency response corresponding to the k-th antenna path at frequency $f_j$, and $\Phi_{r_k,f_j}$ is the phase increment due to wave propagation of $r_k$ distance at frequency $f_j$.

If each of the local oscillators of initiator device 101 and reflector device 102 has a predictable phase relationship from one frequency to another frequency, or equivalently $\Phi_{\mathrm{I},f_j} - \Phi_{\mathrm{R},f_j}$ can be viewed as a constant for all $f_j$, $j$ = 1,2, ..., the combination of the two phases from each of the two devices, for each frequency, is not required. In that case, I/Q values measured by either one of the two devices can be used directly for the "one-way" distance measurement. This reduces the complexity involved in the de-squaring of the two-way channel frequency response, but it imposes increased constraints on the RF frequency synthesis and tighter requirements on the timing accuracy.

If both devices 101 and 102 are tuned precisely to the same frequency, in the absence of noise and reflections, the phase increment $\Phi_{r_k}$ on path k contains the distance information:

$$\Phi_{r_k} = 2\pi f r / C$$

where f is the RF frequency associated with path k, C is the radio wave propagation speed (i.e., the speed of light in air), and r is the distance between antenna k of the initiator device 101 and reflector device 102.

For a Bluetooth system that uses frequencies in the 2.4GHz band, since the LO phase of the receiver wraps around for approximately every 12.5 cm propagation delay, the distance estimates have ambiguities of integer number of 12.5cm. Consequently, the distance measurement range is limited to 12.5 cm, which is not useful in practice. To increase this range, multiple frequencies may be used.

Referring back to FIG. 1, the RF tone exchange process described above is be repeated at 105 and 106, but this time for a second tone f2. To increase the range, the following equation can be used:

$$\Phi_{r,f_1,f_2} = 2\pi(f_2 - f_1)r / C$$

As such, the range depends on the difference between f1 and f2. In some cases of BLE, the offset between neighboring channels is 2 MHz, so the value of (f2 - f1) is 2MHz. Thus, the maximum achievable range is 150 meters. More generally, the range is given by the frequency resolution of the RF channels, while the native spatial resolution is given by the aperture. In some embodiments, 80 tones may be used in the 2.4 GHz band, 1MHz apart from each other (i.e., fk= 2.4GHz+k*1MHz, where k={1, 2, ..., 80}). In some embodiments, frequency channels between the initiator device 101 and reflector device 102 may comprise excluded channels and channels used in channel sounding procedure. To protect some frequency channels from being interfered by channel sounding procedure, e.g., advertisement channels for connection setup between other communication devices, these excluded channels can be excluded from the channel sounding procedure. But since channel frequency response of the excluded channels can be estimated by exploiting channel frequency response on the channels used in the channel sounding procedure, channel frequency response of all the frequency channels including the excluded channels and channels used in channel sounding can be estimated for both distance and angle estimation.

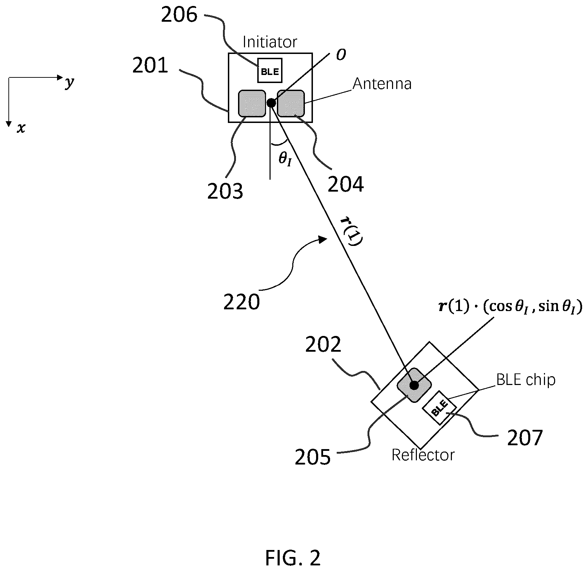

FIG. 2 illustrates an example of a respective signal exchange through each of a plurality of channels between a first communication device 201 and a second communication device 202 according to one or more embodiments. The first communication device 201 comprises at least a first antenna 203 and a second antenna 204 aligned along a direction y and defining a normal x and a local origin $O$ thereto. The second communication device 202 comprises an antenna 205. The respective signal exchange is performed through each of a plurality of channels between the first communication device 201 and the second communication device 202. For each frequency channel, a signal exchange comprises a transmit signal 205a and a receive signal 205b, wherein each transmit signal 205a and receive signal 205b has a frequency which is equal to a base frequency f0 plus an integer multiple of a same frequency-offset. There is at least one propagation path between each of the antennas of the first communication device and at least one antenna of the second communication device. For example, each propagation path may comprise 80 channels. In such embodiments, the base frequency f0 may be 2.4GHz and the frequency-offset $\Delta f$ between two neighboring channels may be 1MHz. The first communication device 201 further comprises a first processing unit 206 and the second communication device 202 further comprises a second processing unit 207. The first processing unit 206 and the second processing unit 207 negotiate configuration parameters in advance for determining an angle of arrival $\theta_l$ defined by normal x and a transmission direction 220 of a direct path between the first communication device 201 and the second communication device 202. While this example shows a two dimensional case with azimuth angle to be estimated, a three dimensional case with both azimuth and elevation angles to be estimated will be addressed later.

The first communication device 201 may be described as an initiator device and the second communication device 202 as a reflector device. In other embodiments, the first communication device 201 is a reflector device and the second communication device 202 is an initiator device.

In one or more embodiments, the first antenna 203 and the second antenna 204 transmit signals with the same frequencies.

In one or more embodiments, the first communication device 201 comprises memory or stores (not shown) configured to store a first plurality of in-phase and quadrature(I/Q) samples generated from each of the signal exchanges between the second communication device 202 and the first antenna 203, and a second plurality of I/Q samples generated from the signal exchanges between the second communication device 202 and the second antenna 204. In other embodiments, the first plurality of I/Q samples and the second plurality of I/Q samples may be stored by the second communication device 202 in its own memory.

The distance between the first antenna and the second antenna may be in the range of equal or less than half the wavelength of the exchanged signals, e.g. 2-6.25cm, in the non-limiting case of 2.4GHz signals. Since

$$\frac{1}{c}\left| r_{k,i} - r_{k+\Delta k,i} \right| \cdot (f_j - f_{j+\Delta j}) \approx 0$$ for small antenna separation, where $r_{k,i}$ is the distance of the i-th propagation path between the k-th antenna of the first communication device and at least one antenna of the second communication device, c is the speed of light and radio waves, i is the multipath index with i = 1 representing the direct propagation path between the two devices, and i > 1 representing any other reflective paths which includes one or more reflections of objects such as walls, metals, etc., any influence on the range estimation between the first communication device and the second communication device caused by the distance between the first antenna and the second antenna is small enough such that it can be ignored. Then the first plurality of I/Q samples and the second plurality of I/Q samples can be concatenated, which doubles the numbers of values the channel frequency response $h_1$ for the first antenna and channel frequency response $h_2$ for the second antenna, in the One-way channel frequency response matrix $H$ as described later, and thereby may improve the accuracy when estimating the distance between the first communication device 201 and the second communication device 202 which will be described as below.

In one or more embodiments, the second communication device 202 comprises only one antenna. Then the channel frequency response $h_1$ for the first antenna is estimated by using the first plurality of in-phase and quadrature(I/Q) samples and the channel frequency response $h_2$ for the second antenna respectively is estimated by using the second plurality of I/Q samples as below.

At first, the pair of PCT matrices $H_{IR}$ and $H_{RI}$ obtained from the first plurality of I/Q samples and the second plurality of I/Q samples can be:

$$H_{\mathrm{IR}} = \begin{bmatrix} \boldsymbol{h}_{\mathrm{IR},1}, & \boldsymbol{h}_{\mathrm{IR},2} \end{bmatrix}, \; H_{RI} = \begin{bmatrix} \boldsymbol{h}_{RI,1}, & \boldsymbol{h}_{RI,2} \end{bmatrix}$$

Where $\boldsymbol{h}_{\mathrm{IR},1}$ and $\boldsymbol{h}_{RI,1}$ are the PCT elements obtained from the first plurality of I/Q samples, and , $\boldsymbol{h}_{IR,2}$ and $\boldsymbol{h}_{RI,2}$ are the PCT elements obtained from the second plurality of I/Q samples.

Then, as described above, the two-way channel frequency response is:

$$H^2 = H_{\mathrm{IR}} \odot H_{\mathrm{RI}} = [\boldsymbol{h}_1^2, \; \boldsymbol{h}_2^2]$$

where $\odot$ denotes Hadamard product.

Finally, the One-way channel frequency response $H = [\boldsymbol{h}_1, \boldsymbol{h}_2]$ can then be reconstructed from $H^2$.

The elements of this matrix, $\boldsymbol{h}_k$, are given by: $\boldsymbol{h}_k = [\boldsymbol{h}_k(1), \boldsymbol{h}_k(2), \boldsymbol{h}_k(j), \cdots]$, where $\boldsymbol{h}_k(j)$ represents the channel frequency response corresponding to the k-th antenna path at frequency fj. $\boldsymbol{h}_1$ represents the channel frequency response corresponding to the first antenna path and $\boldsymbol{h}_2$ represents the channel frequency response corresponding to the second antenna path. 'Antenna path' means an antenna pair with one antenna from initiator side and the other from reflector side. Each antenna path includes all the propagation paths that connect the corresponding one of the antenna pairs. For example, the first antenna path includes all the propagation paths between the first antenna of the first communication device and the antenna of the second communication device. The second antenna path includes all the propagation paths between the second antenna of the first communication device and the antenna of the second communication device.

As described above, respective distance r1, r2, ..., ri..., for each of the propagation paths can be estimated by a reconstructed one-way channel frequency response based on the matrix H including the channel frequency response $\boldsymbol{h}_1$ of the first antenna 203 obtained from the first plurality of I/Q samples and the channel frequency response $\boldsymbol{h}_2$ of the second antenna 204 obtained from the second plurality of I/Q samples. This embodiment shows estimating the respective distance by using both of $\boldsymbol{h}_1$ and $\boldsymbol{h}_2$. In other embodiments, the respective distance r1, r2, ..., ri..., for each of the propagation paths can be estimated only by one of the channel frequency response $\boldsymbol{h}_1$ for the first antenna 203 and the channel frequency response $\boldsymbol{h}_2$ for the second antenna 204.

The estimated channel frequency response $H$, which corresponds to the superposition of the frequency responses of all paths between the reflector device 102 and the first antenna 203 and the second antenna 204 of the initiator device 101, can be represented as:

$$\boldsymbol{h}_k = \boldsymbol{b}_1 w_k(1) + \boldsymbol{b}_2 w_k(2) + \cdots + \boldsymbol{b}_i w_k(i) + \cdots$$

$$\boldsymbol{b}_i = \left[ 1, \; e^{\frac{j2\pi\Delta f r_i}{c}}, \; e^{\frac{j2\pi 2\Delta f r_i}{c}}, \cdots \right]^{\mathrm{T}}, \; \Delta f = f_{j+1} - f_j$$

Where $\boldsymbol{h}_k$ is the k-th column of matrix $H$, $\boldsymbol{b}_i$ represents the standard channel frequency response (CFR) component corresponding to the estimated distance corresponding to the i-th propagation path, where "standard" means unweighted and "component" means the measured CFR $\boldsymbol{h}_k$ is a weighted combination of these components. And $w_k(i)$ are respective weights corresponding to the i-th path and k-th antenna path, including phase and amplitude.

With the respective distance r1, r2,... ,ri,..., a matrix r and a matrix $\boldsymbol{B}$ can be created as below:

$$\boldsymbol{r} = [r_1, \; r_2, \cdots, \; r_i, \cdots]^{\mathrm{T}}$$

where elements of vector r are sorted in ascending order (that is to say, r1 is the shortest distance and r1 < r2 < r3, etc. Then the distance of the direct path $r_{\mathrm{min}}$ has been determined as the first value r1.

$$\boldsymbol{B} = [\boldsymbol{b}_1, \; \boldsymbol{b}_2, \cdots, \boldsymbol{b}_i, \cdots]$$

where $\boldsymbol{b}_i = \left[ 1, \; e^{\frac{j2\pi\Delta f r_i}{c}}, \; e^{\frac{j2\pi 2\Delta f r_i}{c}}, \cdots \right]^{\mathrm{T}}$, $\Delta f = f_{j+1} - f_j$.

In a non-reflective environment, the matrix r may only include one estimated distance. In a reflective environment, the matrix r may include two to more than a dozen distances.

As described above, for the first antenna 203, channel frequency response CFR $h_1$ for each path respectively is estimated by using the first plurality of I/Q samples of the first antenna 203.

As described above, $h_1 = b_1 w_1(1) + b_2 w_1(2) + \cdots + b_i w_1(i) + \cdots$

Then weights of multipath $\hat{w}_1$ can be obtained using $h_1$ and $B$ by e.g., the least squares solution:

$$\hat{w}_1 = \min_{w_1}\|h_1 - Bw_1\|_2^2$$

where $\|\,\|_2$ denotes the 2-norm of a vector, weights of multipath $\hat{w}_1$ is a vector corresponding to each path, including phase and amplitude.

In other embodiment, weights of multipath $\hat{w}_1$ can be obtained by the weighted least squares solution with the distance estimation quality indicator of each path as below:

$$\hat{w}_1 = \min_{w_1}(h_1 - Bw_1)^{\mathrm{H}} Q(h_1 - Bw_1)$$

where $Q = \mathrm{diag}(q_1, q_2, \cdots, q_i, \cdots)$, and $q_i$ is the quality indicator of the i-th propagation path which can be the signal strength estimation of the i-th propagation path.

For element-ordered vector r, the distance of the direct path $r_{min}$ = r1, that is to say it is the first element of the vector **r.** Then the weight of the first path or direct path or line of sight (LOS), $\hat{w}_1(1)$, can be found in vector $\hat{w}_1$, where $\hat{w}_1(1)$ is the first element of the vector $\hat{w}_1$. $\hat{w}_1(1)$ includes the phase and amplitude of the first path (direct path) between the antenna and the second communication device. In other embodiments, for unsorted vector **r,** $\hat{w}_1(1)$ may be the second, or other, element of the vector $\hat{w}_1$ when $r_{min}$ is the second, or other, element in the matrix **r.**

As described above, for the second antenna 204, channel frequency responses $h_2$ for each path respectively are estimated by using the second plurality of I/Q samples of the second antenna 204.

The weights of multipath $\hat{w}_2$ can be obtained using $h_2$ and $B$ by e.g., the least squares solution:

$$\hat{w}_2 = \min_{w_2}\|h_2 - Bw_2\|_2^2$$

Then the weight of the first path or direct path or line of sight (LOS) $\hat{w}_2(1)$ can be found in the vector $\hat{w}_2$.

Based on the weight $\hat{w}_1(1)$ and the other weight $\hat{w}_2(1)$, the angle of arrival, relative to the normal, of signals direct from the second communication device can be determined as will be described hereinbelow.

In one or more embodiments, the first communication device 201 may include three antennas arranged in a plane and the second communication device 202 may also include at least one antenna, the normal being normal to the plane, and the angle of arrival includes an azimuth angle $\theta$ and an elevation angle $\varphi$. For example, the second communication device 202 comprises two or three antennas and an angle of arrival at the second communication device 202 relative to the normal can be determined. In other examples, the first communication device 201 may include three antennas arranged in different planes and the normal being normal to the tangent plane.

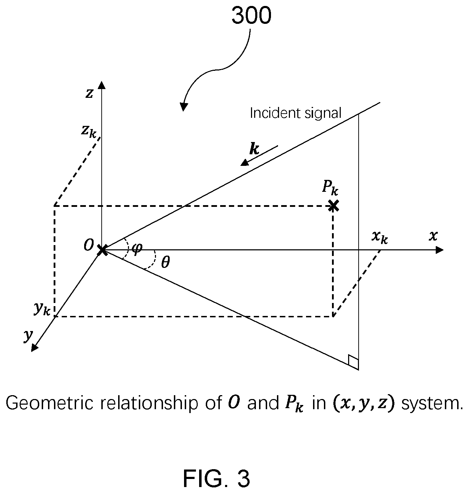

FIG. 3 illustrates geometric relationship of a system 300 with three dimensions according to an exemplary embodiment of the present disclosure. As shown in FIG. 3, $\theta$ is the azimuth angle, $\varphi$ is the elevation angle, $k$ is a vector representing the wave propagation direction.

The relationship between the angle of arrival ($\theta$, $\varphi$) and the respective weight of direct path for each antenna will be discussed as below.

The phase of the direct path for the k-th antenna can be represented as

$$arg\big(\hat{w}_k(1)\big) \approx 2\pi \frac{r_o + \Delta r_k}{c} f_1 = 2\pi \tau_k f_1 + \Phi_{r_o,f_1}$$

where $\hat{w}_k(1)$ is the weight of the direct path for the k-th antenna; where $r_o$ is the distance between the remote device and the local origin $O$, $\Delta r_k$ is the wave propagation distance difference between antenna $k$ at $p_k = (x_k, y_k, z_k)$ and the local origin $O$.

$$\tau_k = \frac{\Delta r_k}{c} = \frac{1}{c}\boldsymbol{k}\cdot\boldsymbol{p}_k = \frac{1}{c}(x_k\cos\theta\cos\varphi + y_k\sin\theta\cos\varphi + z_k\sin\varphi)$$

where $\theta$ is the azimuth angle, $\varphi$ is the elevation angle, k represents the wave propagation direction.

An array observation vector $\boldsymbol{y} = [\hat{\boldsymbol{w}}_1(1), \hat{\boldsymbol{w}}_2(1), ...]^T$ can be represented as

$$\boldsymbol{y} = \boldsymbol{a}(\theta,\varphi) + \boldsymbol{n}$$

where $\boldsymbol{a}(\theta,\varphi)$ is the steering vector and n is the estimation error vector for $\hat{\boldsymbol{w}}_k(1), \hat{\boldsymbol{w}}_2(1), ....$ Then $(\theta,\varphi)$ can be estimated by

$$\left(\hat{\theta},\hat{\varphi}\right) = \max_{m,n}\left|\boldsymbol{y}^H\boldsymbol{a}(\theta_m,\varphi_n)\right|$$

As discussed above, when the first communication device 201 only comprises two antennas, the azimuth angle $\theta$ can be determined by the weight $\hat{\boldsymbol{w}}_1(1)$ and the other weight $\hat{\boldsymbol{w}}_2(1)$. When the first communication device 201 comprises three antennas defining a plane, or more than three antennas arranged in the same plane or different planes, both the azimuth angle $\theta$ and the elevation angle $\varphi$ may be determined by $\hat{\boldsymbol{w}}_1(\mathbf{1}), \hat{\boldsymbol{w}}_2(\mathbf{1})$ and $\hat{\boldsymbol{w}}_3(\mathbf{1})$, where $\hat{\boldsymbol{w}}_3(\mathbf{1})$ is the weight of the direct path between a third antenna and the second communication device.

In one or more embodiments, the first antenna 203 and the second antenna 204 are included in a single antenna enclosure which may be also called a single anchor.

In one or more embodiments, the first communication device 201 only comprises the first antenna 203 and the second antenna 204, the second communication device 202 comprises one antenna 205, and the azimuth angle $\theta$ can be determined as the angle of arrival at the first communication device 201.

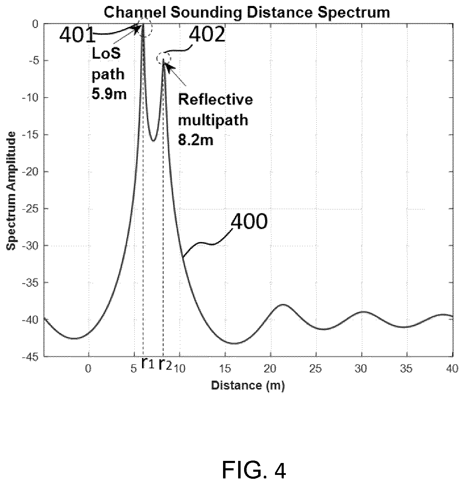

FIG. 4 shows a graph illustrating examples of channel impulse response-based distance measurements producing a crater scenario according to an exemplary embodiment of the present disclosure. The figure shows the channel impulse response on the y-axis against distance on the x-axis. As shown in spectral curve of channel impulse response 400, peak 401 is selected as the estimated distance r1 between the first communication device 201 and the second communication device 202. The estimated distance r1 corresponds to the distance of the direct path which can also be referred to as the first path or light of sight (LoS) between the first communication device 201 and the second communication device 202. Peak 402 may be selected as a second distance r2 which corresponds to the distance of a reflective path between the first communication device 201 and the second communication device 202.

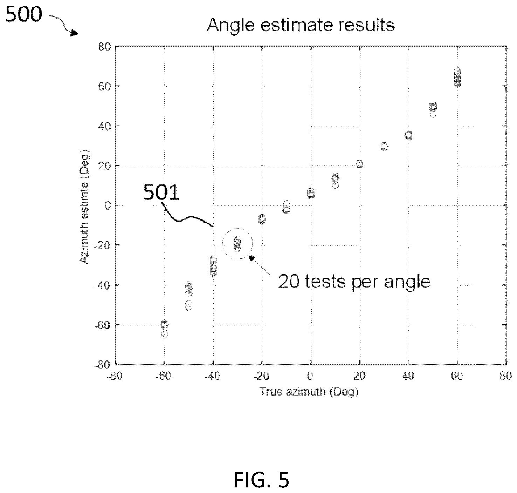

FIG. 5 shows a graph illustrating angle estimation results according to an embodiment of the present disclosure. The figure 500 shows the azimuth estimate on the y-axis against true azimuth on the x-axis. For each true azimuth angle 501, twenty tests are taken to obtain the estimated azimuth angle. As shown in FIG. 5, from -60 degrees to 60 degrees, the estimated azimuth angles are substantially equal to the true azimuth angles.

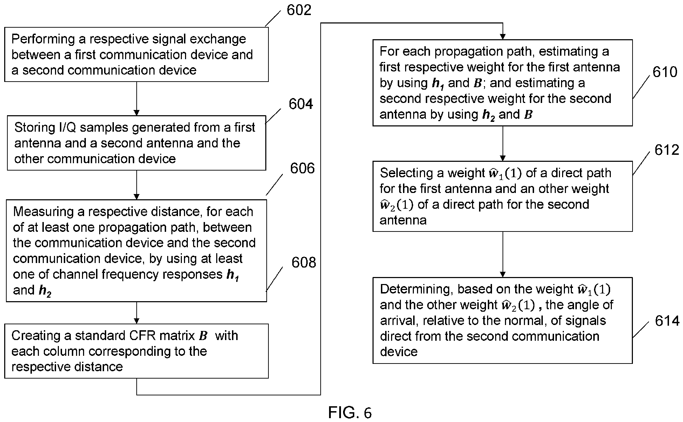

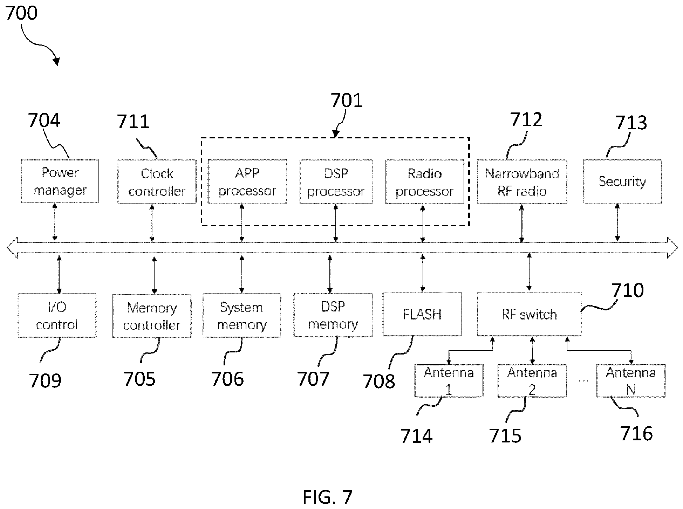

FIG. 6 shows a flowchart illustrating an example of a method 600 for angle estimation according to one or more embodiments of the present disclosure. In various embodiments, method 600 may be performed by device 700 (see FIG. 7).

At step 602, method 600 includes performing a respective signal exchange between a first communication device and a second communication device. The first communication device comprises a first antenna and a second antenna.

The first communication device comprises at least the first and second antennas which define a line passing through the antennas and a normal thereto. The first communication device may comprise a third antenna which is not aligned to the first and second antenna. In such examples the first, second and third antennas define a plane having a normal thereto.

A "signal exchange" as used herein is meant either one of, or a combination of, the following: in the first place, transmitting a respective signal from each of the first antenna, the second antenna, and optionally from any further antennas such as a third antenna or fourth antenna which may be part of the first communication device, and receiving the respective signals at the second communication device; and optionally, in the second place, receiving a respective signal at each of the first antenna, the second antenna, and optionally at any further antennas such as a third antenna or fourth antenna which may be part of the first communication device, the signal having been transmitted from the second communication device. By "signal exchange" including a plurality of at least two "tones", each tone having a defined frequency and corresponding to a channel such as those defined in the Bluetooth low energy or Wi-Fi or IEEE 802. 15.4 specifications, the tones being on a frequency grid, that is to say they are being spaced apart in frequency by a fixed frequency offset. The tones may conform to a Bluetooth low energy specification, for example the frequencies may be 2.402GHz, 2.403GHz, 2.404 GHz, etc,.

At step 604, method 600 includes storing in-phase and quadrature ("I/Q") samples generated from each signal exchange between a first communication device and a second communication device. Each signal exchange has plurality of I/Q samples for each antenna path and each antenna has separate I/Q samples. For a single signal exchange, it means exchanging a signal between one antenna of the first communication device and the other one antenna of the second communication device. These I/Q samples are captured by the second communication device in the baseband stage and captured by the first communication device in the baseband stage. The IQ samples are obtained by capturing the output signals of the analog-to-digital convertors (not shown) with frequency down-converted analog signals as the input signals. The sampling interval of the analog-to-digital converters should be less than the duration of the input signals of the analog-to-digital convertors, e.g., approximately 1/8, 1/16, 1/32, or less of the duration of the input signals of the analog-to-digital convertors.

At step 606, method 600 includes determining a respective distance, for each of at least one propagation path, between the communication device and the second communication device using the I/Q samples stored at step 604 and by any distance estimation algorithm.

In some embodiments, the captured multiple I/Q samples during one signal transmission of each signal exchange in step 604 can be used to estimate a phase correction term (PCT). For example, a PCT with higher signal-to-noise ratio than I/Q samples may be obtained. By bi-directional signal transmission and reflection of a single signal exchange at one frequency channel on one antenna path, two PCTs can be obtained. For each antenna path and all frequency channels, two PCT vectors can be obtained. One of the PCT vectors corresponds to the signal transmission from the first communication device to the second communication device. The other one of the PCT vectors corresponds to the signal reflection from the second communication device to the first communication device. Each element of the PCT vector corresponds to one frequency. When the elements of the two PCT vectors are multiplied, the initial phase terms of the LOs of the first communication device and the second communication device included in a PCT phase can be canceled. Finally, the phase of the PCT will be only related with the distances of all the propagation paths from the second communication device to the antenna corresponding to the PCT.

Each PCT vector forms squared channel frequency response (CFR) of one antenna path. When the elements of this vector are de-squared (i.e the square -root of each element is found), the CFR vector for this antenna path can be obtained. Together, the CFR vectors can form a CFR matrix with each column corresponding to the CFR of each antenna path. Since the separation distance of the first antenna and the second antenna of the first communication device is much smaller than the distance between the first communication device and the second communication device in most cases, the distance difference between a propagation path to the first antenna and to the second antenna of the first communication device from the second communication device can be ignored. Only the distance of each propagation path between the second communication device and the first communication device is considered in step 606. The CFR matrix is the input of the ranging algorithm for the estimation of the distances of the propagation paths between the first communication device and the second communication device. Ranging algorithms such as Fast Fourier Transform (FFT) or Multiple Signal Classification (MUSIC) can be used for distance estimation. In some embodiments, the respective distance is estimated by using both of channel frequency response $h_1$ of the first antenna 203 and channel frequency response $h_2$ of the second antenna 204. In other embodiments, the respective distance r1, r2, ..., ri..., for each of the propagation paths can be estimated only by one of $h_1$ and $h_2$.

The method further comprises, at step 608, creating a respective standard channel frequency response (CFR) vector, a column of standard CFR matrix $B$, corresponding to the respective distance. A column of the CFR matrix B corresponds to the standard CFR vector corresponding to the estimated distance of a respective propagation path. One element of a standard CFR vector is a complex number with amplitude and phase equal to the phase delay during the time of flight on a propagation path between the first communication device and the second communication device. The CFR of each antenna path (e.g., $h_1$ and $h_2$) calculated in the process of distance estimation at step 606 is a weighted combination of the standard CFR vectors created at step 608 because the received signals of each antenna path is a combination of the signals from all propagation paths with each propagation path having a different propagation attenuation and different time-of-flight phase delay.

At step 610, for each propagation path, estimating a vector $\hat{w}_1$ comprising a first respective weight for the first antenna and estimating a vector $\hat{w}_2$ comprising a second respective weight for the second antenna based on the fact that the CFR of each antenna path calculated in the process of distance estimation at step 606 is approximately a weighted combination of the standard CFR vectors created at step 608. The optimization criteria for estimating these weights can be least squares or weighted least squares or any other. Based on the above optimization criteria, a reconstructed CFR, the combination of the columns of the CFR matrix $B$, weighted by the calculated weights, will be very close to the CFR calculated in step 606 for each antenna path with very limited reconstruction error.

Since only the angle-of-arrival of the direct path from the first communication device and the second communication device is required, at step 612, the weight $\hat{w}_1(1)$ of a direct path for the first antenna from the vector $\hat{w}_1$ and the weight $\hat{w}_2(1)$ of a direct path for the second antenna from the vector $\hat{w}_2$ are selected.

At step 614, consists of determining, based on the weight $\hat{w}_1(1)$ and the other weight $\hat{w}_2(1)$, the angle of arrival, relative to the normal of the line passing through the antennas, or relative to any other reference line, of signals direct from the second communication device to the antennas of the first communication device. The angle of arrival can be estimated based on the phase difference of $\hat{w}_1(1)$ and $\hat{w}_2(1)$ caused by the difference of the direct propagation path to the first antenna and second antenna. In one or more embodiments, besides the phase difference, the amplitudes of $\hat{w}_1(1)$ and $\hat{w}_2(1)$ are used to estimate the angle of arrival because the antennas used are not necessarily omnidirectional and the received signal strength of the direct path is related with its propagation direction. In one or more embodiments, the first communication device may comprise more than two antennas, and a third weight $\hat{w}_3(1)$ may be estimated. Then the angle of arrival may be determined based on the weight $\hat{w}_1(1)$, the other weight $\hat{w}_2(1)$ and the third weight $\hat{w}_3(1)$. The angle of arrival can be estimated based on the phase difference of $\hat{w}_1(1)$, $\hat{w}_2(1)$, and $\hat{w}_3(1)$ caused by the difference of the direct propagation path to the first antenna, second antenna and the third antenna. In one or more embodiments, besides the phase difference, the amplitudes of $\hat{w}_1(1)$, $\hat{w}_2(1)$ and $\hat{w}_3(1)$ are used to estimate the angle of arrival. If the three antennas are not located in a line, then both the azimuth angle and the elevation angle can be estimated.

FIG. 7 illustrates an example of a device 700 configured to implement methods described herein according to an embodiment of the present disclosure.

Device 700 includes processors 701 (e.g. an APP processor, a DSP processor, a radio processor, etc.) configured to execute program with instruction and data stored in a system memory 706, DSP memory 707 and FLASH 708 for implementing various systems and method described herein. In device 700, data bus 703 couples its various components and enable signal exchange between those components. Data bus 703 may be implemented as any suitable combination of one or more bus structures. Device 700 comprises power manager 704, such as a battery and/or an AC-DC power supply. Memory controller 705, system memory 706 and DSP memory 707 and FLASH 708 may implement any type of memory and/or other suitable electronic storage. Input-output (I/O) control may be configured to receive input from remote device and provide information to the remote device. RF switch 710 may be configured to switch among a plurality of antennas (e.g., antenna 1, antenna 2, ..., antenna N). Clock controller 711 is configured to control clock signals between those components. Narrowband RF radio unit 712 is configured to provide frequencies in a narrowband. Security unit 713 is configured to keep the device 700 operating safely.

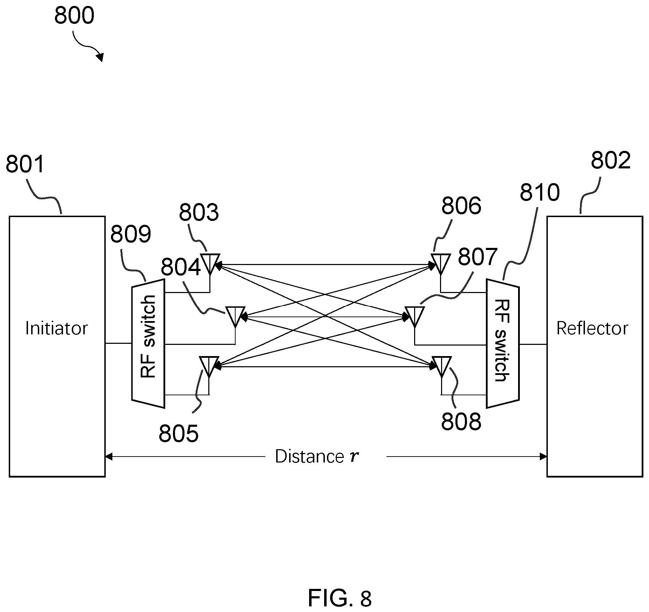

FIG. 8 illustrates system 800 for angle estimation according to an exemplary embodiment of the present disclosure.

As shown in FIG. 8, the system 800 comprises a first communication device 801 and a second communication device 802 described herein. The first communication device 801 comprise at least a first antenna 803 and a second antenna 804 and may comprise a third antenna 805, the first, second and third antennas arranged in, and defining, a first plane, the first and second antennas being aligned along a direction x and defining a normal y thereto. The second communication device 802 comprises a fourth antenna 806, and may comprises one or both of a fifth antenna 807 and a sixth antenna 808. The system 800 is configured to perform a respective signal exchange through each of a plurality of channels between the first communication device 801 and the second communication device 802. Each signal exchange comprises a transmit signal and a receive signal, wherein each of the transmit signal and the receive signal of each signal exchange has a frequency which is equal to a base frequency plus an integer multiple of a same frequency-offset. The system 800 further comprises a first switch 809 and a second switch 810. The first switch 809 is configured to switch each of the first antenna 803, second antenna 804 and third antenna 805 to transmit signals and receive signal between a plurality of frequencies. The second switch 810 is configured to switch the fourth antenna 806 and a fifth antenna 807 and a sixth antenna 808 to receive signals and transmit signal with the same plurality frequencies. The first communication device 801 or the second communication device 802 is configured to executive program instructions for implementing various methods described herein.

For example, the first communication device 801 may comprise two antennas and the second communication device 802 may comprise one antenna.

In other examples, the first communication device 801 may comprise three antennas and the second communication device 802 may comprise three antennas. Although each of the first communication device 801 and the second communication device 802 have three antennas as shown in FIG. 8, it should be understood that either the first communication device 801 or the second communication device 802 may have fewer or more than three antennas.

For example, the second communication device is configured to determining the angle of arrival at the second communication device by executing program instructions for implementing various methods described herein.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the application as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

**Claims**

1. A method for determining an angle of arrival at a first communication device having a first antenna and a second antenna, aligned along a direction and defining a normal thereto, the method comprising:

   performing a respective signal exchange through each of a plurality of channels between the first communication device and a second communication device, wherein each signal exchange comprises a transmit signal and a receive signal, wherein each of the transmit signal and the receive signal of each signal exchange has a frequency which is equal to a base frequency plus an integer multiple of a same frequency-offset;
   storing a first plurality of in-phase and quadrature(I/Q) samples generated from each signal exchange between the second communication device and the first antenna, and a second plurality of I/Q samples generated from the signal exchanges between the second communication device and the second antenna;
   estimating channel frequency response $h_1$ for the first antenna by using the first plurality of in-phase and quadrature(I/Q) samples and channel frequency response $h_2$ for the second antenna by using the second plurality of I/Q samples;
   determining a respective distance, for each of at least one propagation path, between the first communication device and the second communication device by using at least one of the channel frequency responses $h_1$ and $h_2$;
   creating a standard channel frequency response, CFR, matrix B with each column corresponding to the respective distance;
   for each propagation path, estimating a first respective weight for the first antenna based on the channel frequency response $h_1$ for the first antenna and the standard CFR matrix $B$, and estimating a second respective weight for the second antenna based on the channel frequency response $h_2$ for the second antenna and the standard CFR matrix $B$;
   selecting a weight $\hat{w}_1(1)$ of a direct path between the first antenna and the second communication device from the first respective weight and an other weight $\hat{w}_2(1)$ of a direct path between the second antenna and the second communication device from the second respective weight, respectively;
   determining, based on the weight $\hat{w}_1(1)$ and the other weight $\hat{w}_2(1)$, the angle of arrival, relative to the normal, of signals direct from the second communication device.

2. The method of claim 1, wherein the first antenna and the second antenna transmit signals with the same frequencies.

3. The method of claim 1 or 2, wherein to determine the respective distance between the communication device and the second communication device, further comprising:

   using both of the channel frequency responses $h_1$ and $h_2$ to reconstruct a one-way channel response; and
   determining the respective distance between the communication device and the second communication device based on the one-way channel response.

4. The method of any preceding claim, wherein the first communication device comprises one of an initiator device and a reflector device, and the second communication device comprises the other one of the initiator device and the reflector device.

5. The method of c any preceding laim, wherein the second communication device comprises only one antenna, and the angle of arrival is an azimuth angle.

6. The method of any preceding claim, wherein each of the weights $\hat{w}_1(1)$ and $\hat{w}_2(1)$ comprise a phase and an amplitude, and wherein the angle of arrival is determined using a combination of the phase difference of the $\hat{w}_1(1)$ and $\hat{w}_2(1)$ and the amplitudes of $\hat{w}_1(1)$ **and** $\hat{w}_2(1)$.

7. The method of any preceding claim, wherein the communication device comprises three antennas arranged in a plane, the normal being normal to the plane, wherein the method further comprising estimating a third weight $\hat{w}_3(1)$ of a direct path between a third antenna and the second communication device, and determining, based on the weight $\hat{w}_1(1)$, the other weight $\hat{w}_2(1)$ and the third weight $\hat{w}_3(1)$, the angle of arrival, relative to the normal, of signals direct from the second communication device, wherein the angle of arrival includes an elevation angle.

8. The method of any preceding claim, wherein the distance between the first antenna and the second antenna is less or equal to half the wavelength of the exchanged signals.

9. The method of any preceding claim, wherein the first antenna and the second antenna are included in a single antenna enclosure.

10. A communication device, comprising:

a transceiver unit comprising a first antenna and a second antenna, wherein the transceiver unit is configured to perform a signal exchange between the communication device and a second communication device;
a processing unit configured to:

performing a respective signal exchange through each of a plurality of channels between the communication device and a second communication device, wherein each signal exchange comprises a transmit signal and a receive signal, wherein each of the transmit signal and the receive signal of each signal exchange has a frequency which is equal to a base frequency plus an integer multiple of a same frequency-offset;
storing a first plurality of in-phase and quadrature(I/Q) samples generated from each signal exchange between the second communication device and the first antenna, and a second plurality of I/Q samples generated from the signal exchanges between the second communication device and the second antenna;
estimating channel frequency response $h_1$ for the first antenna by using the first plurality of in-phase and quadrature(I/Q) samples and channel frequency response $h_2$ for the second antenna respectively by using the second plurality of I/Q samples;
determining a respective distance, for each of at least one propagation path, between the communication device and the second communication device by using at least one of the channel frequency responses $h_1$ and $h_2$;
creating a respective standard channel frequency response (CFR) matrix $B$ with each column corresponding to the respective distance;
for each propagation path, estimating a first respective weight for the first antenna based on the channel frequency responses $h_1$ for the first antenna and the standard CFR matrix $B$, and estimating a second respective weight for the second antenna based on the channel frequency responses $h_2$ for the second antenna and the standard CFR matrix $B$;
selecting a weight $\hat{w}_1(1)$ of a direct path between the first antenna and the second communication device from the first respective weight and an other weight $\hat{w}_2(1)$ of a direct path between the second antenna and the second communication device from the second respective weight, respectively;
determining, based on the weight $\hat{w}_1(1)$ and the other weight $\hat{w}_2(1)$, the angle of arrival, relative to the normal, of signals direct from the second communication device.

11. The communication device of claim 10, wherein the communication device comprises a single antenna enclosure which includes the first antenna and the second antenna.

12. The communication device of claim 10 or 11, wherein the communication device comprises one of an initiator device and a reflector device, and the second communication device comprises the other one of the initiator device and the reflector device.

13. The communication device of any of claims 10 to 12, wherein the second communication device comprises one antenna, and the angle of arrival is azimuth angle.

14. The communication device of any of claims 10 to 13, wherein the communication device comprises three antennas, and the angle of arrival includes an elevation angle.

15. The communication device of any of claims 10 to 14, wherein the distance between the first antenna and the second antenna is less or equal to half the wavelength of the exchanged signals.

**FIG. 1**

FIG. 2

Geometric relationship of $O$ and $P_k$ in $(x, y, z)$ system.

FIG. 3

**FIG. 4**

FIG. 5

Performing a respective signal exchange between a first communication device and a second communication device ⟋ 602

Storing I/Q samples generated from a first antenna and a second antenna and the other communication device ⟋ 604

Measuring a respective distance, for each of at least one propagation path, between the communication device and the second communication device, by using at least one of channel frequency responses $h_1$ and $h_2$ ⟋ 606

Creating a standard CFR matrix $B$ with each column corresponding to the respective distance ⟋ 608

For each propagation path, estimating a first respective weight for the first antenna by using $h_1$ and $B$; and estimating a second respective weight for the second antenna by using $h_2$ and $B$ ⟋ 610

Selecting a weight $\hat{w}_1(1)$ of a direct path for the first antenna and an other weight $\hat{w}_2(1)$ of a direct path for the second antenna ⟋ 612

Determining, based on the weight $\hat{w}_1(1)$ and the other weight $\hat{w}_2(1)$, the angle of arrival, relative to the normal, of signals direct from the second communication device ⟋ 614

FIG. 6

700

704    711        701        712    713

| Power manager | Clock controller | APP processor | DSP processor | Radio processor | Narrowband RF radio | Security |

| I/O control | Memory controller | System memory | DSP memory | FLASH | RF switch | 710 |

709    705    706    707    708

| Antenna 1 | Antenna 2 | ... | Antenna N |

714    715    716

FIG. 7

800

801

809

803

804

806

807

810

802

805

808

Initiator

RF switch

Reflector

RF switch

Distance $r$

FIG. 8

Europäisches
Patentamt

European
Patent Office

Office européen
des brevets

# EUROPEAN SEARCH REPORT

**Application Number**

EP 25 18 1630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/166631 A1 (TONG FEI [GB] ET AL) 28 May 2020 (2020-05-28) * figures 3b, 4, 14 * * paragraphs [0038] - [0063], [0089] - [0139] * ----- | 1-15 | INV. G01S3/04 G01S3/48 G01S13/84 G01S3/10 |
| X | KOTARU MANIKANTA ET AL: "Localizing Low-power Backscatter Tags Using Commodity WiFi", PROCEED-INGS OF ACM LONG CONFERENCE NAME CONFERENCE, 1 December 2017 (2017-12-01), page 14, XP055816117, * figure 3; algorithm 1 * * sections: 1 Introduction; 3. Design. * ----- | 1-15 | |
| A | VAN MARTER JAYSON P ET AL: "Support Vector Regression for Bluetooth Ranging in Multipath Environments", IEEE INTERNET OF THINGS JOURNAL, IEEE, vol. 10, no. 13, 13 February 2023 (2023-02-13), pages 11533-11546, XP011943902, DOI: 10.1109/JIOT.2023.3244743 [retrieved on 2023-02-14] * abstract; figure 1; algorithm 1 * * sections: I. Introduction; III. System Model; IV. Ranging by Support Vector Regression. * ----- | 1-15 | TECHNICAL FIELDS SEARCHED (IPC)<br><br>G01S |
| A | US 2024/113792 A1 (STANCIU MIHAI-IONUT [RO] ET AL) 4 April 2024 (2024-04-04) * figures 3-4B * * paragraphs [0036] - [0053] * ----- | 1-15 | |

The present search report has been drawn up for all claims

| Place of search | Date of completion of the search | Examiner |
|---|---|---|
| Munich | 17 October 2025 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 18 1630

This annex lists the patent family members relating to the patent documents cited in  the above-mentioned European search report.
The members are as contained in the European Patent Office EDP file on
The European Patent Office is in no way liable for these particulars which are merely given for the purpose of information.

17-10-2025

| Patent document cited in search report | Publication date | Patent family member(s) | Publication date |
|---|---|---|---|
| US 2020166631 A1 | 28-05-2020 | DE 102019132072 A1 | 28-05-2020 |
| | | KR 20200064004 A | 05-06-2020 |
| | | US 2020166631 A1 | 28-05-2020 |
| US 2024113792 A1 | 04-04-2024 | NONE | |

For more details about this annex : see Official Journal of the European Patent Office, No. 12/82

**EP 4 664 140 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Bluetooth channel sounding CR_PR draft*, 22 June 2023